Europäisches Patentamt

European Patent Office

Office européen des brevets

(19)

(11) **EP 0 668 518 B1**

(12) **EUROPÄISCHE PATENTSCHRIFT**

(45) Veröffentlichungstag und Bekanntmachung des Hinweises auf die Patenterteilung:
**17.12.1997 Patentblatt 1997/51**

(51) Int Cl.6: **G02B 6/14**, G02B 6/12

(21) Anmeldenummer: **94102543.9**

(22) Anmeldetag: **21.02.1994**

(54) **Anordnung zur Polarisationswandlung**

Device for polarization conversion

Dispositif de conversion de polarisation

(84) Benannte Vertragsstaaten:
**DE FR GB IT NL SE**

(43) Veröffentlichungstag der Anmeldung:
**23.08.1995 Patentblatt 1995/34**

(73) Patentinhaber: **ROBERT BOSCH GMBH**
**70442 Stuttgart (DE)**

(72) Erfinder: **Lüsse, Paul, Dipl.-Ing.**
**D-38106 Braunschweig (DE)**

(56) Entgegenhaltungen:
**WO-A-93/15423** **US-A- 4 359 260**
**US-A- 5 243 669**

## Beschreibung

In der klassischen, der sogenannten diskreten Optik ist es bekannt, daß die Polarisation optischer Strahlung beispielsweise mit einem Sloc-Filter gedreht werden kann, das mit gegeneinander verkippten, doppelbrechenden $\lambda$/2-Plättchen arbeitet.

Aus Y. Shani et al: Polarization rotation in asymmetric periodic loaded rib waveguides, Appl. Phys. Lett., vol. 59., no. 11, pp. 1278-1280, 1991 ist ein integriert optisches Bauelement zur Polarisationswandlung bekannt, das nach dem Funktionsprinzip einer periodischen Störung arbeitet. Ein Rippenwellenleiter in InP/InGaAsP-Technik ist in longitudinaler Richtung periodisch mit einer asymmetrischen Beschichtung aus InP- und InGaAsP-Lagen versehen. Die Beschichtung befindet sich abwechselnd auf der einen oder anderen Seite der longitudinalen Achse des Rippenwellenleiters. Eine Wandlung von HE- bzw. EH-in EH- bzw. HE-Moden wird erreicht, eine vollständige Wandlung beispielsweise mit Verlusten von 2-3 dB mit einer 3,7 mm langen Struktur mit einem Arsenanteil der wellenführenden Schicht von 60 %. Wie auf Seite 1279, rechte Spalte, 1. Absatz angegeben, ist eine Polarisationswandlung mittels obiger Beschichtungen bei einem vergrabenen Rippenwellenleiter nur in äußerst geringem Maß zu beobachten.

Da für integriert optische Wellenleiter üblicherweise ein Arsenanteil von 25 % angestrebt wird, Wellenleiter aus einem solchen Material aber eine große Schwebungswellenlänge zwischen den $HE_{00}$- und $EH_{00}$-Moden aufweisen, was zu langen Bauelementen führt, ist ein Einsatz obigen Konzeptes für Wellenleiter aus InGaAsP mit 25 % Arsen nicht sinnvoll. Selbst ein 3,7 mm langes Bauelement, wie es sich aus obigem Konzept ergibt, ist für den Einsatz in integriert optischen Schaltungen nicht geeignet.

Aus H. Heidreich et al: Passive mode converter with a periodically tilted InP/GaInAsP rib-waveguide, IEEE Photon. Technol. Lett., vol. 4, no. 1, pp.34-36, 1992 ist ebenfalls ein passiver Polarisationswandler bekannt. Der Polarisationswandler arbeitet mit einem stark gestörten Wellenleiter, nämlich einem zur Substratoberfläche verkippten Wellenleiter. Ein Verkippen wird erreicht, indem der Rippenwellenleiter über Stufen im Substrat geführt wird. Zur Herstellung eines solchen Elementes müssen Stufen ins Substrat geätzt werden, deren Überwachsung große Herstellungsprobleme bedingt.

Beide angegebenen Strukturen zur Polarisationswandlung lassen sich nur unter Inkaufnahme von Leitungseinbußen mit anderen Elementen wie Polarisationsweichen oder 3 dB-Kopplern integrieren.

Es ist Aufgabe der Erfindung, eine monolithisch integrierbare Anordnung zur Polarisationswandlung anzugeben, die mit einem vergrabenen Wellenleiter arbeitet.

Die Aufgabe wird mit einer Anordnung mit den Merkmalen des Patentanspruches 1 gelöst.

Vorteilhafte Weiterbildungen sind in den Unteransprüchen angegeben.

Die erfindungsgemäße Anordnung ist in InP/InGaAsP-Technik realisierbar, wobei der Arsenanteil der wellenführenden Schicht bei 25 % liegt. Außerdem ist die Anordnung äußerst kurz und somit für integriert optische Schaltungen geeignet. Da die erfindungsgemäße Anordnung mit einem vergrabenen Wellenleiter arbeitet, ist eine Integration mit anderen Funktionselementen leicht und ohne Leistungseinbußen möglich. Die Herstellung einer erfindungsgemäßen Anordnung ist unproblematisch.

Die Anordnung weist auf einem Substrat einen vergrabenen Wellenleiter, der von einer Pufferschicht abgedeckt ist, auf. Das Element ist in Längsrichtung in n Sektionen n$\epsilon$/N aufgeteilt. In jeder Sektion befindet sich auf der Pufferschicht eine Metallschicht, die seitlich über dem Wellenleiter angeordnet ist. In aufeinander folgenden Sektionen ist die Metallschicht jeweils auf verschiedenen Seiten angeordnet. Es entsteht eine periodische Struktur zur Polarisationswandlung, die insbesondere in optischen Überlagerungsempfängern eingesetzt werden kann.

Die Metallschichten der einzelnen aufeinander folgenden Sektionen können in longitudinaler Richtung durch einen unbeschichteten Bereich voneinander getrennt sein.

Bei der erfindungsgemäßen Anordnung wird eine vorgegebene Polarisationsdrehung für Wellenlängen in einem bestimmten Bereich erreicht. Für andere außerhalb dieses Bereichs liegende Wellenlängen ist eine Anpassung der Struktur erforderlich. Es ist vorteilhaft, daß statt einer solchen Anpassung eine Abstimmung der Struktur auf entsprechende Wellenlängen durchgeführt werden kann. Dies erfolgt beispielsweise durch Injizierung von Ladungsträgern oder durch das Anlegen einer Spannung an die Metallschichten, was zu einer Veränderung der Brechzahlen der lichtführenden Schichten führt.

Ausführungsbeispiele der Erfindung werden anhand der Zeichnungen beschrieben. Es zeigen:

Figur 1 a,b Querschnitt und Aufsicht durch eine erfindungsgemäße Anordnung ohne lateralen Versatz;

Figur 2 Querschnitt einer erfindungsgemäßen Anordnung mit weiter seitlich versetzter Schicht aus leitendem Material;

Figur 3 Amplitude in den beiden Polarisationen nach n Sektionen für eine erfindungsgemäße Anordnung ohne lateralen Versatz, aufgetragen über der Länge einer metallisierten Sektion;

Figur 4 perspektivische Darstellung einer erfindungsgemäßen Anordnung mit 3 Sektionen mit lateralem Versatz;

Figur 5 Anregungswirkungsgrad an der Stoßstelle zwischen einem Wellenleiter und einer erfindungsgemäßen Anordnung in Abhängigkeit vom lateralen Versatz zwischen den Wellenleitern;

Figur 6 Anregungswirkungsgrad an der Stoßstelle zwischen zwei Sektionen einer erfindungsgemäßen Anordnung in Abhängigkeit vom lateralen Versatz der Wellenleiter;

Figur 7 Amplitude in den beiden Polarisationen nach n Sektionen für eine erfindungsgemäße Anordnung mit einem lateralen Versatz von 0,3 µm aufgetragen über der Länge einer metallisierten Sektion.

Für polarisationsunabhängige, monolithisch integrierte optische Überlagerungsempfänger wird eine Anordnung zur Polarisationswandlung benötigt. Sie hat die Aufgabe, die Polarisation der Strahlung aus dem Lokaloszillator (Halbleiterlaser), der in der HE-Polarisation schwingt, in ihrer Richtung so zu drehen, daß am Ausgang der Anordnung jeweils 50 % der verbleibenden Leistung in den beiden orthogonalen Polarisationen, der HE- und EH-Mode, geführt wird. Dabei sollen die Verluste der Anordnung möglichst klein sein.

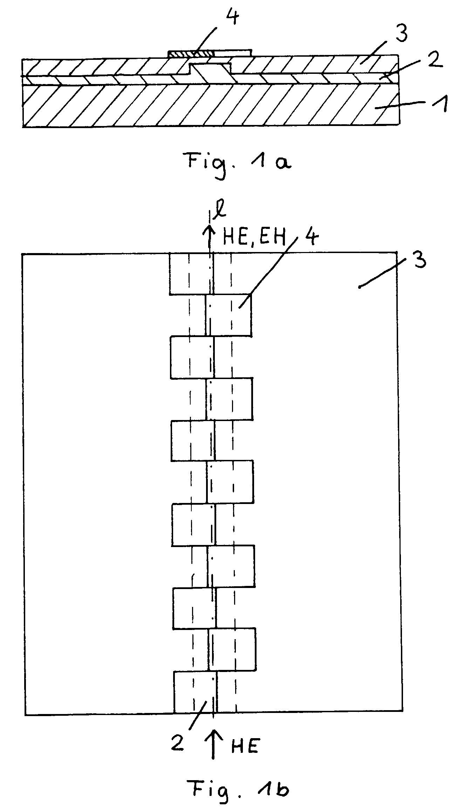

Figur 1 zeigt eine erfindungsgemäße Anordnung im Querschnitt und in einer Draufsicht. Auf einem Substrat 1 aus InP ist ein Rippenwellenleiter 2 aus InGaAsP aufgebracht. Der Rippenwellenleiter 2 ist vergraben, ist also von einer Pufferschicht 3 aus InP abgedeckt. Auf dieser Pufferschicht 3 befindet sich eine Schicht 4 aus einem leitenden Material. Das Element ist in longitudinaler Richtung in n Sektionen nε/N aufgeteilt (hier n = 11). In jeder Sektion befindet sich eine Metallschicht, die asymmetrisch zur Längsachse 1 des Wellenleiters 2 angeordnet ist und diesen in seiner Breite nur bereichsweise bedeckt. Die Schichten befinden sich beispielsweise immer nur auf einer Seite der Längsachse oder ragen nur geringfügig über die Längsachse. Die Seite auf der die Metallisierung aufgebracht ist, ist für aufeinander folgende Sektionen unterschiedlich. Es entsteht eine periodische Struktur.

Anhand der Wirkungsweise des Solc-Filters, das mit gegeneinander verkippten, doppelbrechenden $\lambda/2$-Plättchen arbeitet, kann die Funktionsweise der integrierbaren, passiven Anordnung zur Polarisationswandlung erklärt werden. Bei dieser einfachen Betrachtung sind die beiden geführten Oberflächenwellen an den Metallschichten nicht mit einbezogen, da sie nur sehr wenig angeregt werden und bei ihrer Ausbreitung so starke Verluste erleiden, daß praktisch keine Leistung in diesen Wellen mehr die nächste Stoßstellen erreicht.

Außerdem wird mit reellen Amplitudenanregungskoeffizienten gerechnet, was bei den geringen Verlusten der Eigenwellen eine übliche und gerechtfertigte Näherung darstellt.

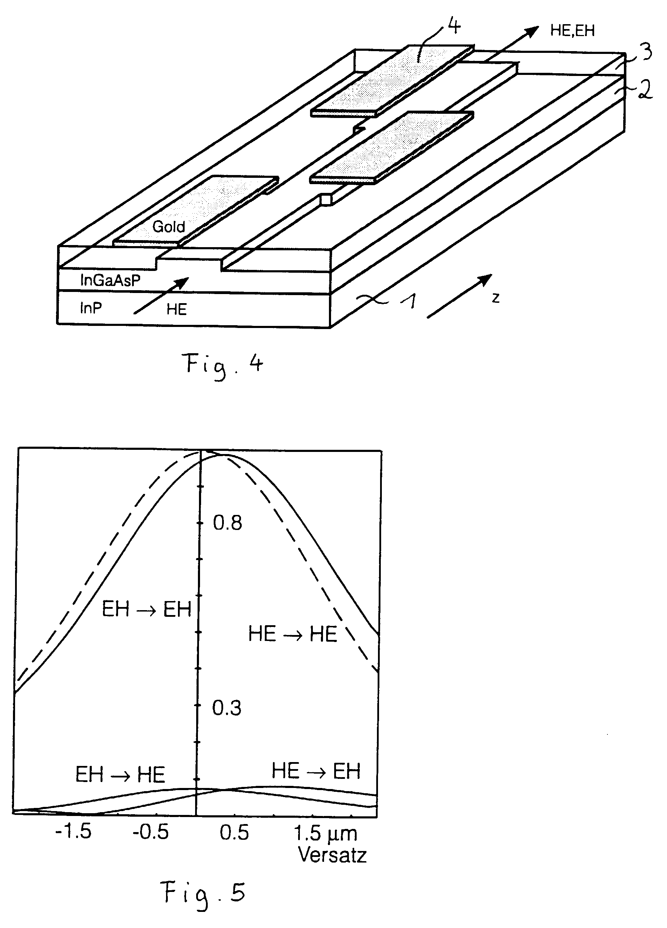

Angeregt wird die Struktur mit der Grundwelle des Systemwellenleiters, der HE-Mode. Dies ist in der Figur 1b und 4 durch den Pfeil mit der Beschriftung "HE" angedeutet. Es folgt die erste asymmetrisch metallisierte Sektion, die für die HE- und EH-Mode als verkippter, doppelbrechender Bereich angesehen werden kann. An der Eingangsstoßstelle wird die Leistung aus der HE-Welle des Systemwellenleiters zum größten Teil in die HE-Mode des durch die Metallisierung gestörten Wellenleiters der Anordnung übergekoppelt. Durch die stark erhöhte Hybridizität der Eigenwellen des metallisierten Wellenleiters wird jedoch auch die EH-Mode angeregt, und zwar typischerweise mit 10 % der Amplitude der HE-Welle. Nach einer Ausbreitungsstrecke von $z = \pi/(\beta_{HE} - \beta_{EH})$, d.h. nachdem sich eine Phasenverschiebung von 180° oder $\lambda/2$ zwischen den beiden genannten Eigenwellen aufgebaut hat, wird die zweite Sektion, die die Metallisierung auf der anderen Seite trägt und damit eine Verkippung zur anderen Seite aufweist, angeregt. Durch geeignete Anordnung der asymmetrischen Wellenleiter und Wahl der Längen der einzelnen Sektionen erhöht sich die Amplitude in der EH-Polarisation sukzessive. Bei ausreichender Anzahl an Sektionen ist die Amplitude in beiden Polarisationen gleich groß, und es wird wieder auf den Systemwellenleiter des integriert optischen Chips übergegangen.

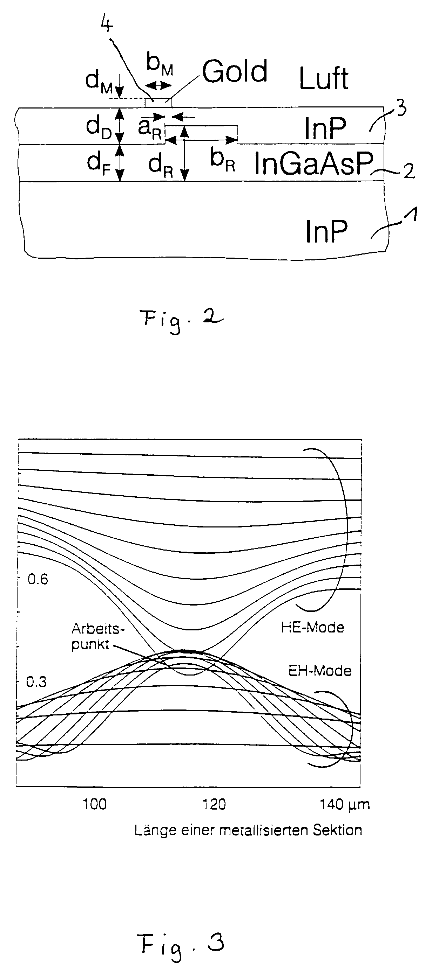

Im folgenden soll die Funktionsweise der erfindungsgemäßen Anordnung anhand einer konkreten Dimensionierung vorgestellt werden. Dazu zeigt die Figur 2 einen Querschnitt durch eine erfindungsgemäße Anordnung. In der Tabelle sind für die einzelnen Größen Werte angegeben.

Die Wellenlänge $\lambda$ beträgt 1,55 µm, der Arsenanteil der wellenführenden Schicht beträgt 25 %.

| Größe | $a_R$ | $b_M$ | $b_R$ | $d_D$ | $d_F$ | $d_M$ | $d_R$ | $n_S$ | $n_F$ | $n_C$ | $n_G$ |
|---|---|---|---|---|---|---|---|---|---|---|---|
| Wert | 0,2 | 0,75 | 2,0 | 0,5 | 0,4 | 0,1 | 0,7 | 3,1659 | 3,2615 | 3,11659 | 0,5138 -j10,7377 |

geometrische Angaben $a_i, b_i$ und $d_i$ in µm.

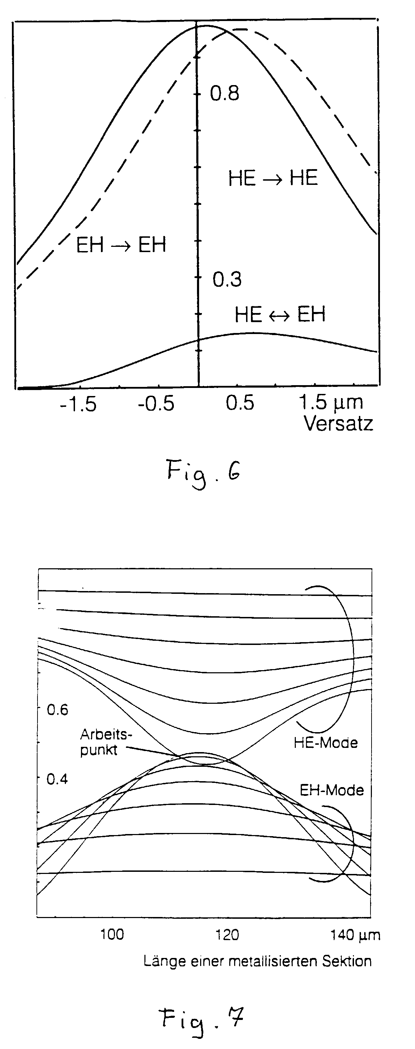

Als erstes sind die Eigenwellen sowohl des System- als auch des asymmetrisch metallisierten Wellenleiters zu berechnen. Nachdem diese Ergebnisse vorliegen, sind die Anregungswirkungsgrade zwischen den beteiligten Moden durch Anpassen der tangentialen Felder an den Stoßstellen zu bestimmen. Figur 5 zeigt dazu den Amplitudenanregungskoeffizient für die vier wichtigen Modenkombinationen an der Stoßstelle zwischen dem unmetallisierten Systemwellenleiter und dem asymmetrisch metallisierten Wellenleiter der erfindungsgemäßen Anordnung. Wie der Figur zu entnehmen ist, regt eine einfallende HE-Mode nicht nur die Eigenwelle gleicher Polarisation des weiterführenden Wellenleiters an, sondern auch die Mode der dazu orthogonalen Polarisation, die EH-Welle. Ist die EH-Mode die anregende Feldverteilung, sind die Verhältnisse bei leicht verschobenen Kurven analog. Wird eine Stoßstelle zwischen zwei auf verschiedenen Seiten metallisierten Wellenleitern betrachtet, ergeben sich die Verläufe in Figur 6. Die Anregung der jeweils anderen Polarisation ist hier noch ausgeprägter als bei der in Figur 5 betrachteten Stoßstelle. Während das Maximum der Überkopplung der HE-Moden an der Stoßstelle bei einem sehr geringen Versatz auftritt, liegt es bei den EH-Moden bei einem lateralen Versatz von ca. 0,7 $\mu$m. Für eine ausgewogene Überkopplung ist deshalb ein geringer lateraler Versatz zwischen den Wellenleiterabschnitten der einzelnen Sektionen erforderlich.

Figur 4 zeigt eine perspektivische Darstellung einer erfindungsgemäßen Anordnung mit 3 Sektionen mit lateralem Versatz.

Wird die Stoßstelle n zwischen zwei Sektionen bei z = $z_0$ betrachtet, setzt sich die Amplitude $A_{HE,n+1}$ der HE-Polarisation zu Beginn der Sektion n + 1 aus den Anteilen $h_h \cdot A_{HE,n}(z_0)$, der Amplitude $A_{HE,n}$ der HE-Mode am Ende der Sektion n, multipliziert mit dem Anregungskoeffizienten $h_h$ zwischen den beiden HE-Moden, sowie $h_e \cdot A_{EH,n}(z_0)$, der Amplitude $A_{EH,n}$ der EH-Mode an der Stelle $z_0$ der Sektion n multipliziert mit dem Anregungskoeffizienten $h_e$ der HE-Mode durch die EH-Mode, zusammen. In Formelschreibweise ergibt sich

$$A_{HE,n+1}(z_0) = h_h \cdot A_{HE,n}(z_0) + h_e \cdot A_{EH,n}(z_0).$$

Für die Amplitude $A_{EH,n+1}$ der EH-Polarisation läßt sich der Zusammenhang

$$A_{EH,n+1}(z_0) = e_e \cdot A_{EH,n}(z_0) + e_h \cdot A_{HE,n}(z_0)$$

angeben, wobei $e_e$ der Anregungskoeffizient der EH-Moden untereinander und $e_h$ der Anregungskoeffizient der EH-durch die HE-Welle ist. Danach breiten sich die beiden Eigenwellen mit ihren Ausbreitungskoeffizienten $\gamma_{HE}$ und $\gamma_{EH}$ aus, so daß sich mit

$$A_{HE,n+1}(z_0 + z) = A_{HE,n+1}(z_0) \cdot \exp\{-j\gamma_{HE}z\}$$

und

$$A_{EH,n+1}(z_0 + z) = A_{EH,n+1}(z_0) \cdot \exp\{-j\gamma_{EH}z\}$$

die Amplitudenfaktoren für die Sektion n+1 in Abhängigkeit des Ortes z angegeben werden können. Damit lassen sich die Werte für alle Stoßstellen berechnen. Auch die Eingangs- und Ausgangsstoßstellen sind nach diesem Formalismus zu behandeln, wobei dann allerdings die Werte für die Amplitudenanregungsfaktoren aus Figur 5 einzusetzen sind.

Nach dem im letzten Absatz dargestellten Berechnungsschema sind für den Wellenleiter aus Figur 4 zwei laterale Verschiebungen betrachtet worden. Die erste Anordnung besitzt einen Versatz von 0,3 $\mu$m an den Stoßstellen. Dazu zeigt Figur 7 die Amplitude in den beiden Polarisationen für Bauelemente mit n=1, 2, ..., 7 Sektionen aufgetragen über die Länge einer metallisierten Sektion. Verwendet man 7 Sektionen, schneiden sich die Amplitudenkurven der beiden Polarisationen. Damit befinden sich jeweils 50 % der verbleibenden Leistung in den beiden Polarisationen, womit das Bauteil die gewünschte Funktion zeigt. In diesem Entwurfsbeispiel ist die Anordnung bei 3,7 dB Gesamtverlusten nur 0.78 mm lang. Verzichtet man auf einen Versatz an den Stoßstellen ist sie mit 1,12 mm deutlich länger und weist mit 6,2 dB auch höhere Verluste auf. Für die Anordnung ohne Versatz zeigt Figur 3 die Amplituden in den beiden Polarisationen mit der Anzahl der Sektionen als Parameter aufgetragen über der Länge einer metallisierten Sektion.

**Patentansprüche**

1. Anordnung zur Polarisationswandlung mit folgenden Merkmalen:

    a) auf einem Substrat (1) befindet sich ein vergrabener optischer Wellenleiter (2), insbesondere ein Rippenwellenleiter, der von einer Pufferschicht (3) abgedeckt ist;

    b) der Wellenleiter (2) ist in Längsrichtung in n Wellenleiterabschnitte aufgeteilt, wobei n ≥ 2 ist;

c) in jedem Wellenleiterabschnitt befindet sich auf der Pufferschicht (3) eine Schicht (4) aus Metall, die asymmetrisch zur Längsachse des Wellenleiters (2) angeordnet ist und diesen in seiner Breite nur bereichsweise bedeckt;

d) die Schichten (4,4') benachbarter Wellenleiterabschnitte befinden sich jeweils im wesentlichen auf verschiedenen Seiten der Längsachse des Wellenleiters.

2. Anordnung nach Anspruch 1, bei der aufeinander folgende Wellenleiterabschnitte gegeneinander lateral versetzt sind.

3. Anordnung nach Anspruch 2, bei der der laterale Versatz der Wellenleiterabschnitte alternierend einmal zur einen und einmal zu anderen Seite der Längsachse des Wellenleiters hin erfolgt.

4. Anordnung nach einem der Ansprüche 2 oder 3, bei der der laterale Versatz für alle Wellenleiterabschnitte den gleichen Betrag hat.

5. Anordnung nach einem der Ansprüche 2 oder 3, bei der der Betrag des lateralen Versatz von Wellenleiterabschnitt zu Wellenleiterabschnitt zu- oder abnimmt.

6. Anordnung nach einem der Ansprüche 1 bis 5, bei der über alle Wellenleiterabschnitte betrachtet eine periodische Struktur vorliegt.

7. Anordnung nach einem der Ansprüche 1 bis 6, bei der die Schichten (4) aus Metall geometrisch kongruent sind.

8. Anordnung nach einem der Ansprüche 1 bis 7, bei der die Schicht (4) aus Gold besteht.

9. Anordnung nach einem der Ansprüche 1 bis 8, bei der Substrat (1) und Pufferschicht (3) aus InP und der Wellenleiter (2) aus InGaAsP bestehen.

## Claims

1. Arrangement for polarization conversion, having the following features:

   a) on a substrate (1) there is a buried optical waveguide (2), in particular a ribbed waveguide, which is covered by a buffer layer (3) ;

   b) the waveguide (2) is divided in the longitudinal direction into n waveguide sections, with $n \geq 2$;

   c) in each waveguide section there is, on the buffer layer (3), a metal layer (4) which is arranged asymmetrically with respect to the longitudinal axis of the waveguide (2) and only zonally covers it in its width;

   d) the layers (4, 4') of neighbouring waveguide sections are each essentially on different sides of the longitudinal axis of the waveguide.

2. Arrangement according to Claim 1, in which successive waveguide sections are offset laterally with respect to each other.

3. Arrangement according to Claim 2, in which the lateral offset of the waveguide sections is alternately to one side and to the other side of the longitudinal axis of the waveguide.

4. Arrangement according to one of Claims 2 and 3, in which the lateral offset has the same value for all waveguide sections.

5. Arrangement according to one of Claims 2 and 3, in which the value of the lateral offset increases or decreases from waveguide section to waveguide section.

6. Arrangement according to one of Claims 1 to 5, in which, observed over all the waveguide sections, there is a periodic structure.

7. Arrangement according to one of Claims 1 to 6, in which the metal layers (4) are geometrically congruent.

8. Arrangement according to one of Claims 1 to 7, in which the layer (4) consists of gold.

9. Arrangement according to one of Claims 1 to 8, in which the substrate (1) and buffer layer (3) consist of InP and the waveguide (2) consists of InGaAsP.

**Revendications**

1. Dispositif de conversion de polarisation ayant les caractéristiques suivantes :

   a) un guide d'onde optique (2) est enterré dans un substrat (1), notamment un guide d'onde à nervures, recouvert par une couche tampon (3),
   b) le guide d'onde (2) est subdivisé dans sa direction longitudinale en n segments de guide d'onde, $(n \geq 2)$,
   c) dans chaque segment de guide d'onde, la couche tampon (3) est recouverte d'une couche de métal asymétrique par rapport à l'axe longitudinal du guide d'onde (2) et ne recouvrant celui-ci que sur une zone de sa largeur,
   d) les couches (4, 4') de segments de guide d'onde, voisins se trouvent chaque fois principalement sur des côtés différents de l'axe longitudinal du guide d'onde.

2. Dispositif selon la revendication 1,
   dans lequel
   les segments de guide d'onde successifs sont décalés latéralement.

3. Dispositif selon la revendication 2,
   dans lequel
   le décalage latéral des segments de guide d'onde a lieu alternativement d'un côté et alternativement de l'autre côté de l'axe longitudinal du guide d'onde.

4. Dispositif selon l'une des revendications 2 et 3,
   dans lequel
   le décalage latéral de tous les segments de guide d'onde a la même valeur.

5. Dispositif selon l'une des revendications 2 ou 3,
   selon lequel
   l'amplitude du décalage latéral augmente ou diminue d'un segment de guide d'onde à l'autre.

6. Dispositif selon l'une des revendications 1 à 5,
   selon lequel
   l'ensemble des segments de guide d'onde a une structure périodique.

7. Dispositif selon l'une des revendications 1 à 6,
   selon lequel
   les couches (4) en métal sont géométriquement congruentes.

8. Dispositif selon l'une des revendications 1 à 7,
   selon lequel
   la couche (4) est en or.

9. Dispositif selon l'une des revendications 1 à 8,
   selon lequel
   le support (1) et la couche tampon (3) sont en InP et le guide d'onde en InGaAsP.

4

3

2

1

Fig. 1a

$\ell$

HE,EH  4

3

2    HE

Fig. 1b

7

Fig. 2

Fig. 3

Fig. 4

Fig. 5

0.8

HE → HE

EH → EH

0.3

HE ↔ EH

-1.5    -0.5    0.5    1.5 µm
Versat

Fig . 6

0.6

Arbeitspunkt

HE-Mode

0.4

EH-Mode

100    120    140 µm

Länge einer metallisierten Sektion

Fig . 7